(19) **Europäisches Patentamt**

**European Patent Office**

**Office européen des brevets**

(11) **EP 0 983 844 A2**

(12) **EUROPÄISCHE PATENTANMELDUNG**

(43) Veröffentlichungstag:
08.03.2000 Patentblatt 2000/10

(51) Int. Cl.⁷: **B32B 27/36**, B32B 7/02,
G11B 5/73

(21) Anmeldenummer: 99116657.0

(22) Anmeldetag: 26.08.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.09.1998 DE 19839848**

(71) Anmelder:
**Mitsubishi Polyester Film GmbH**
**65203 Wiesbaden (DE)**

(72) Erfinder:
• **Hellmann, Jörg**
**55131 Mainz (DE)**
• **Hilkert, Gottfried**
**55291 Saulheim (DE)**

(74) Vertreter:
**Schweitzer, Klaus, Dr. et al**
**Patentanwaltskanzlei Zounek,**
**Industriepark Kalle-Albert,**
**Rheingaustrasse 190-196**
**65203 Wiesbaden (DE)**

(54) **Mehrschichtige, biaxial orientierte Polyesterfolie, Verfahren zu ihrer Herstellung und ihre Verwendung als Magnetbandfolie mit optimierten elektromagnetischen Eigenschaften und Wickelbarkeit**

(57) Die Erfindung betrifft eine dreischichtige, biaxial orientierte Polyesterfolie, die bei sehr guten elektromagnetischen Eigenschaften gegenüber Folien aus dem Stand der Technik verbesserte Abriebeigenschaften aufweist. Die Folie ist beidseitig aufgebaut aus mindestens einer Basisschicht B und auf dieser Basisschicht aufgebrachten Deckschichten A und C, wobei diese Deckschichten definierte Gasströmungen im Rauhigkeitsprofil aufweist. Die Erfindung betrifft weiterhin ein Verfahren zur Herstellung der Folie und ihre Verwendung als Magnetbandfolie.

EP 0 983 844 A2

## Beschreibung

Die Erfindung betrifft eine zumindest dreischichtige, biaxial orientierte Polyesterfolie, die bei verbesserten elektromagnetischen Eigenschaften gegenüber Folien aus dem Stand der Technik eine verbesserte Wickelbarkeit bei gleichzeitig guten Abriebeigenschaften aufweist und die aufgebaut ist aus mindestens einer Basisschicht B und beidseitig auf dieser Basisschicht aufgebrachten Deckschichten A und C, wobei diese Folienoberflächen durch die Gasströmung im Rauhigkeitsprofil definiert werden. Die Folie weist darüber hinaus eine spezifische Trübung von ≤ 0.4%/µm auf. Die Erfindung betrifft weiterhin ein Verfahren zur Herstellung der Folie und ihre Verwendung, insbesondere als Magnetbandfolie.

Polyesterfolien wurden schon seit langem, insbesondere aufgrund ihrer exzellenten mechanischen Eigenschaften, als Trägermaterial für magnetische Aufzeichnungsmaterialien verwendet. Ein optimales magnetisches Aufzeichnungsmedium mit guten elektromagnetischen Eigenschaften weist eine möglichst "glatte" Oberfläche auf. Für ein gutes Verarbeitungsverhalten bei der Herstellung der Trägerfolie und bei der Beschichtung zum Magnetband (Wickelbarkeit) aber auch später im Gebrauch des Endproduktes (Abriebfestigkeit), sollte die Oberfläche eine gewisse Rauhigkeit aufweisen. Diese an sich widersprüchlichen Anforderungen können von Monofolien (einschichtigen Folien) nur mit einer gewissen Kompromißbereitschaft erfüllt werden, da bei diesen Folien die Optimierung der einen Eigenschaft immer zu Lasten der anderen Eigenschaft geht.

Es sind aber heute auch schon koextrudierte Mehrschichtfolien bekannt (AB, ABA und ABA'), mit denen auch eine sogenannte "Dual-Surface"-Charakteristik erzeugt werden kann. Hierbei kann man den beiden Folienoberflächen in begrenztem Maße unterschiedliche Eigenschaften (Rauhigkeiten, Topographien) zuweisen.

So wird beispielsweise in der **EP-A-0 135 451** eine "Dual-Surface"Folie vom Typ A/B beschrieben, wobei die beiden Folienoberflächen unterschiedliche $R_a$-Werte aufweisen. Diese Folien haben jedoch den Nachteil, daß sie nicht wirtschaftlich hergestellt werden können, da beide Schichten - entsprechend zwei aufeinanderliegenden Monofolien - mit Partikelsystemen ausgerüstet werden müssen und somit im Vergleich zu Monofolien keine Kostenersparnis erlauben. Darüber hinaus wird das bei jedem kommerziellen Herstellungsprozeß anfallende und (zwingend) wiederzuverwendende Folienregenerat (Recyclat), welches in mindestens einer Oberflächenschicht der A/B-Folie eingearbeitet werden muß, die Qualität der Magnetbandfolie beeinträchtigen.

Eine Verbesserung dieser Qualitätsproblematik wird in der **EP-A-0 609 060** und der **EP-A-0 663 286** durch das Prinzip der A/B/A-Koextrusion erreicht. Hier kann die Wirkung des Regenerats auf die Folienoberfläche durch den abschirmenden Effekt der beiden Deckschichten A reduziert werden. Eine A/B/A-Folie zeigt jedoch nach außen hin die Eigenschaft einer (dünnen) Monofolie, d.h. der Vorteil der Schaffung von unterschiedlichen Oberflächeneigenschaften geht verloren. Die "Dual-Surface"-Charakteristik kann bei A/B/A-Folien jedoch bedingt wiederhergestellt werden, durch unterschiedliche Dicken der A-Deckschichten. Solche Folien werden dann als A/B/A'-Folien (≠A/B/C) bezeichnet. Nachteilig an diesen Folien ist aber die immer noch eingeschränkte Flexibilität in der Gestaltung der Oberflächentopographien der beiden Folienoberflächen. Die Gasströmung im Rauhigkeitsprofil der A-Seiten einer A/B/A-Folie unterscheidet sich jedoch nicht. Beim Übergang zu A/B/A'-Folien, d.h. bei Erhöhung der Schichtdicke einer A-Seite, verändert sich zwar die Rauhigkeit der betroffenen Seite, kaum jedoch deren Gasströmung im Rauhigkeitsprofil. Die durch eine Schichtdickenerhöhung induzierte Erhöhung der Rauhigkeit führt nicht zu einer merklichen Verbesserung der Laufeigenschaften, da die durch die Schichtdickenanhebung zugeführten Pigmente im wesentlichen nur flache Erhebungen erzeugen und somit den $R_a$-Wert zwar anheben, aber für das gesetzte Ziel der Verbesserung der Laufeigenschaften keinen Beitrag leisten und somit nicht erfüllen.

Vereinzelt sind auch schon A/B/C- und A/B/C/B-Folien hergestellt und beschrieben worden (**EP-A-0 502 745**), jedoch enthält hierbei wiederum mindestens eine Oberflächenschicht Regenerat - welches die oben beschriebenen Nachteile aufweist - oder aber die Hinweise auf A/B/C-Folien sind unspezifisch (**EP-A-0 347 646**). Die in **EP-A-0 502 745** offenbarten Mehrschichtfolien (A/B/C/B- und A/B/C-Folien) variieren die Rauhigkeiten der Folienoberflächen durch Änderung der Partikelkonzentration bei konstanter Partikelgröße. Hierdurch wird eine Beeinflussung der Gasströmung im Rauhigkeitsprofil nur begrenzt erreichbar.

Es wurde bereits vorgeschlagen (Aktenzeichen 198 14 710.5 der Deutschen Patentanmeldung) die Oberflächentopographien einer mindestens dreischichtigen Folie so einzustellen, dass deren beide Oberflächen durch Deckschichten A und C gebildet wird, wobei sich zwischen diesen Deckschichten eine Basisschicht B befindet, wobei die Deckschicht A einen $R_a$-Wert von ≤ 15 nm, einen $R_z$-Wert von ≤ 150 nm aufweist und eine Anzahl von Erhebungen/Vorsprüngen $N_a$ pro 0.36 mm² aufweist, die mit ihren jeweiligen Höhen $h_a$ in folgender Beziehung steht:

$$A_1 \cdot e^{-B_1 \cdot ha} \leq N_a \leq A_2 \cdot e^{-B_2 \cdot ha} \tag{1}$$

mit

$A_1 = 300,$ $\quad A_2 = 7000$

$B_1 = 7.0,$      $B_2 = 8.0$

$0.01\ \mu m \leq h_a \leq 1.0\ \mu m$

und die Deckschicht C einen $R_a$-Wert aufweist, der größer ist als der der Deckschicht A und eine Anzahl von Erhebungen/Vorsprüngen $N_c$ pro 0.36 mm$^2$ aufweist, die mit ihren jeweiligen Höhen $h_c$ in folgender Beziehung steht:

$$N_c \leq F \cdot e^{-G \cdot h_c} \qquad (2)$$

mit

$F = 20.000$ und $G = 9.0$

und wobei die spezifische Trübung $\leq 0.4$ %/$\mu m$ ist.

Folien mit Messwerten für die Gasströmung im Rauhigkeitsprofil auf der Oberfläche A von >1000 sec. und <2000 und auf der Oberfläche C von <600 sec. sind dort nicht beschrieben.

Aufgabe der vorliegenden Erfindung war es nun, eine koextrudierte, biaxial orientierte mehrschichtige Polyesterfolie zur Verfügung zu stellen, die sich als Trägermaterial für magnetische Aufzeichnungsmedien eignet und gleichzeitig eine definierte (d.h. "glatte") Oberfläche A (für gute elektromagnetische Eigenschaften des Magnetbandes) und eine definierte (d.h. "rauhe") Oberfläche C (für gute Wickelbarkeit bei der Produktion der Trägerfolie sowie der Beschichtung bei schnellaufenden Beschichtungsanlagen und gutes Laufverhalten im späteren Betrieb des Bandes und gleichzeitig einen niedrigen Abrieb) aufweist.

Weiterhin soll sich die Folie wirtschaftlich (kostengünstig) herstellen lassen. Entscheidend ist weiterhin, dass sich die Folien auch dann noch als Trägerfolien eignen, wenn die auf die Trägerfolie aufgebrachte Magnetschicht < 2,5 μm dick ist. Magnetbänder mit solch geringen Magnetschichtdicken stellen extrem hohe Anforderungen an die Topographie der Trägerfolie, weil offensichtlich durch große Erhebungen auf der Folienoberfläche die "dünn" aufgebrachte Magnetschicht stärker beeinflußt wird, was sich in schlechteren elektromagnetischen Eigenschaften auswirkt.

Diese Aufgabe wird erfüllt durch eine biaxial orientierte, koextrudierte, mindestens dreischichtige Polyesterfolie, deren beide Oberflächen durch Deckschichten A und C gebildet werden, wobei sich zwischen diesen Deckschichten eine Basisschicht B befindet, dadurch gekennzeichnet, daß die Deckschicht A einen Messwert für die Gasströmung im Rauhigkeitsprofil von > 1000 sec. und < 2000 sec. aufweist und die Deckschicht C einen Messwert für die Gasströmung im Rauhigkeitsprofil von <600 sec. aufweist.

Für die Erzielung von guten elekromagnetischen Eigenschaften der Deckschicht A ist eine "glatte" Oberfläche erforderlich. Unter „glatt" im erfindungsgemäßen Sinne werden weniger kleine $R_a$-Werte verstanden als vielmehr eine Deckschicht A mit großen Messwerten für die Gasströmung im Rauhigkeitsprofil, d.h. geringe Gasströmung. Die Gasströmung im Rauhigkeitsprofil der Deckschicht A muß kleiner sein als die der Deckschicht C.

Zur Erzielung einer guten Wickelbarkeit (allgemein Laufverhalten) sowie eines guten Abriebverhaltens ist eine "rauhe" Rückseite (Deckschicht C) mit kleinen Messwerten für die Gasströmung im Rauhigkeitsprofil, d.h. hohe Gasströmung, erforderlich. Die Gasströmung im Rauhigkeitsprofil der Deckschicht C muß größer sein als die der Deckschicht A.

Als besonders zweckmäßig hat es sich erwiesen, wenn der Messwert für die Gasströmung im Rauhigkeitsprofil der Deckschicht A > 1100 sec. insbesondere > 1200 sec. ist.

Für die Deckschicht C hat es sich als besonders zweckmäßig erwiesen, wenn der Messwert für die Gasströmung im Rauhigkeitsprofil < 500 sec. insbesondere < 450 sec. beträgt.

Bevorzugte spezifische Trübungen für die erfindungsgemäße Folie liegen bei ≤0.40 %, besonders bevorzugt bei ≤ 0.35 %/ μm, insbesondere bei ≤ 0.30 % / μm.

In den bevorzugten und den besonders bevorzugten Ausführungsformen zeichnet sich die erfindungsgemäße Folie überraschenderweise durch verbesserte elektromagnetische Eigenschaften und eine verbesserte Wickelbarkeit sowie ein verbessertes Laufverhalten bei weiterverarbeitenden Prozessen mit hohen Geschwindigkeiten aus.

Die erfindungsgemäße Folie enthält zur Erzielung der guten elektromagnetischen Eigenschaften sowie der guten Wickelbarkeit in den Deckschichten Pigmente. Die Steuerung der Gasströmung im Rauhigkeitsprofil geschieht zweckmäßigerweise durch Variation der mittleren Korngröße $d_{50}$. Zur Feinoptimierung der Meßwerte für die Gasströmung im Rauhigkeitsprofil kann eine Variation der Pigmentkonzentration vorgenommen werden. Korngrößen ($d_{50}$) von 0.1 μm bis 0.6 μm, bevorzugt 0.2 μm bis 0.5 μm, insbesondere 0.3 μm bis 0.4 μm für die Deckschicht (A) haben sich als zweckmäßig erwiesen. Für die Deckschicht (C) haben sich Korngrößen ($d_{50}$) von 0.4 μm bis 1.0 μm, bevorzugt 0.5 μm bis 0.9 μm, insbesondere 0.6 μm bis 0.7 μm als zweckmäßig erwiesen. Handelt es sich bei den eingesetzten Pigmenten um agglomerationsfähige Pigmente wie $Al_2O_3$ oder $SiO_2$, so ist mit "mittlerer Korngröße" deren Sekundärkorngröße gemeint. Üblicherweise liegen die Primärkorngrößen solcher Pigmente bei 10 bis 100 nm. Die eingesetzten Pigmentsysteme können eine monomodale oder als Mischung von zwei oder mehreren Pigmentsystemen auch eine bimodale oder multimodale Verteilung aufweisen, wobei im Falle der bimodalen Verteilung sich diese in ihren jeweiligen $d_{50}$-Werten unterscheiden. Bevorzugt werden Pigmente mit einer engen Korngrößenverteilung eingesetzt.

Zur Erreichung der Meßwerte für die Gasströmung im Rauhigkeitsprofil der Deckschicht A und C haben sich Pimentkonzentrationen von 1.000 ppm bis 10.000 ppm, bevorzugt 2.000 ppm bis 7.000 ppm, insbesondere 3.000 ppm bis 6.000 ppm erwiesen.

Erfindungsgemäß ist die Folie zumindest dreischichtig aufgebaut und weist auf der einen Seite der Schicht B (=Basisschicht) die Deckschicht A und auf der anderen Seite der Schicht B eine weitere Deckschicht C aus Polyethylenterephthalat auf. Beide Deckschichten enthalten Pigmente, die zur Erreichung der Meßwerte für die Gasströmung im Rauhigkeitsprofil notwendig sind.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2$-, $-C(CH_3)_2$-, $-C(CF_3)_2$-, $-O$-, $-S$- oder $-SO_2$- steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als vorteilhaft haben sich solche Verfahren erwiesen, bei denen Umesterungskatalysatoren eingesetzt werden, mit denen nur wenige und/oder nur kleine Erhebungen/Vorsprünge auf der Oberfläche der Folie erzeugt werden. Bevorzugt sind hierbei insbesondere Magnesium- und Mangan-Salze. Diese Umesterungskatalysatoren werden vorteilhaft bei der Herstellung des Basisrohstoffes, besonders vorteilhaft aber bei der Herstellung des Rohstoffes für die Deckschichten verwendet.

Für die Deckschichten können prinzipiell die gleichen Polymere verwendet werden wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren besteht, welches Ethylen-2,6-naphthalat-Einheiten und Ethylen-terephthalat-Einheiten enthalten. Bis zu 10 Mol-% der Polymere können aus weitere Comonomeren (s.o.) bestehen.

Für eventuell vorhandene Zwischenschichten können prinzipiell die gleichen Polymere verwendet werden, wie zuvor für die Basisschicht und die Deckschichten beschrieben.

Die Basisschicht und die anderen Schichten können zusätzlich übliche Additive, wie bspw. Stabilisatoren und/oder Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. über Masterbatche bei der Extrusion zugegeben werden. Als besonders geeignet haben sich Masterbatch-Pigmentkonzentrationen von 0.1 bis 5 Gew.-% erwiesen. Eine detaillierte Beschreibung der einsetzbaren Antiblockmittel findet sich beispielsweise in der **EP-A-0 602 964.**

Die Basisschicht der erfindungsgemäßen Folie enthält keine über Masterbatche zugeführten Pigmente. Durch das Einbringen von Regenerat (= wiederverwertbare Folienreste) kann die Basisschicht o.g. Pigmente in kontrollierter bzw. in geringer Menge enthalten. Als besonders vorteilhaft haben sich Regeneratanteile von 20 bis 60 Gew.-% (bezogen auf das Gewicht der Basisschicht) erwiesen.

Die erfindungsgemäße Polyesterfolie ist mindestens dreischichtig aufgebaut und enthält die beiden Deckschichten A und C. Dicke und Zusammensetzung der zweiten Deckschicht C können unabhängig von der Deckschicht A gewählt werden, wobei die zweite Deckschicht ebenfalls die bereits genannten Polymere oder Polymermischungen enthalten kann, welche aber nicht mit der ersten Deckschicht identisch sein müssen. Die zweite Deckschicht kann auch andere gängige Deckschichtpolymere enthalten. Bevorzugt sind beide Deckschichten gleich dick. Der Vorteil der erfindungsgemäßen Folie liegt gerade darin, daß sich die unterschiedlichen Messwerte der Gasströmungen im Rauhigkeitsprofil der Folienoberflächen durch gezielte Variation der Pigmentkorngröße und gegebenenfalls der Pigmentkonzentration und der Polymere bei im wesentlichen gleicher Deckschichtdicke einstellen lassen.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht sie aus dem für die Basisschicht verwendeten Polyester. Sie kann auch die für die Deckschichten beschriebenen Additive enthalten. Die Dicke der Zwischenschicht ist im allgemeinen in der Größenordnung der Deckschichtdicken.

Bei der dreischichtigen erfindungsgemäßen Folie sind die Dicken der Deckschichten A und C im allgemeinen größer als 0,2 µm und liegen im Bereich von 0,3 bis 2,5 µm, bevorzugt im Bereich von 0,5 bis 2,0 µm, besonders bevorzugt im Bereich von 0,7 bis 1,8 µm, wobei die Deckschichten A und C gleich oder verschieden dick sein können. Bevorzugt sind sie im wesentlichen gleich dick.

Die Gesamtdicke der erfindungsgemäßen Polyesterfolie kann innerhalb weiter Grenzen variieren. Sie beträgt 5 bis 40 µm, insbesondere 7 bis 20 µm, vorzugsweise 9 bis 15 µm.

Zur Herstellung der Schichten A und C (Deckschichten A und C) werden Granulate aus Polyethylenterephthalat jeweils einem Extruder zugeführt. Die Materialien werden bei etwa 300 °C aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Abzugswalze abgezogen und abgekühlt und gegebenenfalls über weiteren Walzen weiter abgekühlt und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den geforderten Eigenschaften der Folie. Im allgemeinen wird die Längsstreckung bei 80 bis 130 °C und die Querstrekkung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Vor der Querstreckung kann man eine oder beide Oberfläche(n) der Folie nach den bekannten Verfahren inline beschichten. Die In-Line-Beschichtung kann beispielsweise zu einer verbesserten Haftung der magnetisierbaren Schicht aber auch zur Verbesserung des antistatischen Verhaltens oder des Verarbeitungsverhaltens dienen.

Bei der nachfolgenden Thermofixierung wird die Folie etwa 0,1 bis 10 sec. lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der magnetisierbaren Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Sofern erwünscht, erfolgt das Aufbringen von magnetisierbaren Schichten auf üblichen industriellen Anlagen.

Ein Vorteil der Erfindung besteht darin, daß die Herstellungskosten der erfindungsgemäßen Folie geringer sind als diejenigen nach dem Stand der Technik. Die verarbeitungs- und gebrauchsrelevanten Eigenschaften der erfindungsgemäßen Folie sind auf die gewünschten Eigenschaften maßgeschneidert. Die bei der Herstellung der Folie anfallenden Folienabfälle werden als Regenerat, ohne Einbuße in der Qualität, wiederverwendet.

Die Folie eignet sich hervorragend als Trägerfolie für Magnetbänder, insbesondere solchen, deren Magnetschichtdicke < 2,5 µm ist. Durch die erfindungsgemäß gestaltete Oberfläche wird die Magnetschicht nicht oder nur unwesentlich moduliert, welches zu den hervorragenden elektromagnetischen Eigenschaften der Bänder führt.

Zusammengefaßt zeichnet sich die erfindungsgemäße Folie durch gute elektromagnetische Eigenschaften bei hoher Abriebfestigkeit aus. Desweiteren besitzt sie das gewünschte gute Verarbeitungsverhalten, insbesondere hervorragende Schneidbarkeit und Wickeleigenschaften.

Die nachstehende Tabelle (Tabelle 1) faßt die wichtigsten erfindungsgemäßen Folieneigenschaften noch einmal zusammen.

Tabelle 1

|  | erfingungsgemäßer Bereich | bevorzugt | besonders bevorzugt | Einheit | Meßmethode |
|---|---|---|---|---|---|
| Messwert d. Gasströmung (Deckschicht A) | >1000 <2000 | >1100 <2000 | >1200 <2000 | sec. | wie beschrieben |
| Messwert d. Gasströmung (Deckschicht C) | <600 | <500 | <450 | sec. | wie beschrieben |
| spez. Trübung | 0.4 | 0.35 | 0.3 |  |  |

Zur Charakterisierung der Rohstoffe und der Folien wurden die folgenden Methoden benutzt:

**Bestimmung der Rauhigkeit**

Die Rauhigkeit $R_a$ der Folie wurde nach DIN 4762 bei eine Cut-off von 0,08 mm bestimmt.

Gerät :              Perthometer SP8 (Fa. Hommel) auf Glasplatte
Taster :             RFHTB-50 mit Kufe
Nadeldurchmesser :  5 µm
Auflagekraft :       0,4 mN
Abstandkufe :        -25 mm

**Bestimmung der spezifischen Trübung**

Die Trübung der Folie wurde nach ASTM-D 1003-61 (Meßmethode A) mit dem Meßgerät XL-211 Hazemeter der Firma BYK Gardner bestimmt. Die spezifische Trübung =

$$\frac{Tr\ddot{u}bung}{Gesamtdicke\ der\ Folie} \frac{\%}{\mu\ m}$$

**Oberflächengasströmungszeit**

Das Prinzip des Meßverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand wirkt.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit [sec], die die Luft benötigt, um in dem Rezipienten einen Druckanstieg von 56 mbar zu bewirken.

Meßbedingungen:

Meßfläche:         45,1[cm$^2$]
Anpreßgewicht     1276 [g]
Lufttemperatur     23 [°C]
Luftfeuchte        50 [%] rel.Feuchte
Luftdruck         1 [bar]
Gassammelvolumen1,2 [cm$^3$]
Druckintervall      56 [mbar]

**Messung der Wickelbarkeit**

Zur Messung der Wickelbarkeit konnte keine genormte Meßmethode herangezogen werden. Eine Aussage zur Wickelbarkeit wurde möglich durch die Beobachtung der Folie während der Aufrollung zu einer Maschinenrollte bei allgemein gleichbleibenden Einstellung der Maschinenparameter bei einer Wickelgeschwindigkeit von 380 Metern.
Bei schlechter Wickelbarkeit konnte deutlich das "Aufschwimmen" der Folie über die komplette Breite beobachtet werden.
Eine gute Wickelbarkeit zeichnete sich dadurch aus, daß sich die Folie über die gesamte Folienbreite glatt wickeln ließ und kein Aufschwimmen zu beobachten war. Sogar eine Geschwindigkeitssteigerung auf 450 Meter konnte problemlos durchgeführt werden.

Breite der Maschinenrolle :    5,6 m
Beobachtete Lauflänge :    mind. 20.000 m

**Bestimmung der elektromagnetischen Eigenschaften (EMP)**

Die elektromagnetischen Eigenschaften wurden nach DIN IEC 60 B (CO) 69 bestimmt. Es wurde jeweils die Koextrusion A Seite (glatte Seite) der hergestellten Folien nach den üblichen und bekannten Verfahren magnetisch beschichtet, kalandriert und für die Bestimmung der elektromagnetischen Eigenschaften ausgewertet. Die Stärke der Magnetschicht betrug typischerweise 1,8 bis 2,0 μm.

**Beispiele 1 und 2**

Chips aus Polyethylenterephthalat (hergestellt über das Umesterungsverfahren mit Mn als Umesterungskatalysator, Mn-konzentration: 100 ppm) und arteigenes Recyclat mit einer "allgemeinen" Partikelkonzentration vo. 1.150 ppm ($CaCO_3$ < 1,0 μm; $Al_2O_3$ 0,06 μm) wurden bei 135 °C auf eine Restfeuchte von unterhalb 50 ppm getrocknet und dem Extruder für die Basisschicht B zugeführt.
Daneben wurden Mischungen von Chips aus Polyethylenterephthalat (hergestellt über das Umesterungsverfahren mit Mn als Umesterungskatalysator, Mn-Konzentration: 100 ppm), die entsprechend Tabelle 2 pigmentiert sind, ungetrocknet den jeweiligen Doppelschneckenextrudern für die Deckschichten A und C zugeführt.
Es wurde durch Koextrusion und anschließende stufenweise Orientierung in Längs- und Querrichtung eine transparente dreischichtige A/B/C-Folie mit einer Gesamtdicke von 15 μm hergestellt.

Basisschicht B:

50,0 Gew.-% Polyethylenterephthalat mit einem SV-Wert von 770
50,0 Gew.-% Recyclat mit einemSV-Wert von 730

Die Herstellungsbedingungen in den einzelnen Verfahrensschritten waren:

| Extrusion: | Temperaturen: | A-Schicht: | 290 °C |
| | | B-Schicht: | 290 °C |
| | | C-Schicht: | 290 °C |
| Längsstrek-kung: | Temperatur: | | 80 - 125 °C |
| | Längsstreckverhältnis: | | 4,7 |
| Querstreckung: | Temperatur: | | 80- 135 °C |
| | Querstreckverhältnis: | | 4,0 |
| Fixierung: | Temperatur: | | 210 - 225 °C |

**Vergleichsbeispiele 3, 4 und 5**

Für Vergleichsbeispiele 3, 4 und 5 wurde gemäß der technischen Beschreibung zu dem Beispiel 1 und 2 vorgegangen. Die Pigmentierung der Deckschichten A und C ist in Tabelle 2 dargestellt.

Tabelle 2

| Beispiel | Koextrusion A | | Koextrusion C | | |
| --- | --- | --- | --- | --- | --- |
| | $CaCO_3$ | | $CaCO_3$ | | $Al_2O_3$ $d_{50}$=0,06 µm |
| | $d_{50}$ [µm] | % | $d_{50}$ [µm] | % | % |
| 1 | 0,4 | 0,45 | 0,7 | 0,55 | 0,3 |
| 2 | 0,4 | 0,35 | 0,7 | 0,5 | 0,1 |
| 3 (Vgl.) | 0,7 | 0,3 | 0,7 | 0,5 | 0,45 |
| 4 (Vgl.) | 0,6 | 0,45 | 0,4 | 0,5 | 0,45 |
| | | | 0,7 | 0,1 | |
| 5(Vgl.) | 0,6 | 0,25 | 0,7 | 0,5 | 0,1 |
| Beispiele 1 und 2 sowie Vergleichsbeispiele 3, 4 und 5 (Schichtdicke A=C= 1 µm , B = 13 µm) Prozentangaben erfolgen in Gew.-% | | | | | |

Tabelle 3 zeigt eindeutig, daß Folien, deren Meßwerte für die Gasströmung im Rauhigkeitsprofil im erfindungsgemäßen Bereich liegen (Beispiele 1 und 2), hervorragend elektromagnetische Eigenschaften bei gleichzeitig guten Wickeleigenschaften aufweisen. Die Kontrolle der Messzeit für die Gasströmung im Rauhigkeitsprofil zeigt, wie diese sich für die Schicht A auf die elektromagnetischen Eigenschaften sowie für die Schicht C auf die Wickeleigenschaften (bzw. das Laufverhalten) auswirkt. In den erfindungsgemäßen Beispielen konnten die elektromagnetischen Eigenschaften und die Wickelbarkeit gegenüber dem Standard (Vergleichsbeispiele 3 - 5) deutlich verbessert werden.

Die Abriebeigenschaften der erfindungsgemäßen Folien liegen in einem guten Bereich.

Tabelle 3

| Beispiel Nr. | Ra/Rz (A) (nm) | Ra/Rz (C) (nm) | Messwert für die Gasströmung sec. | Spez. Trübung | EMP | Wickelbarkeit |
|---|---|---|---|---|---|---|
| 1 | 10/69 | 15/118 | 1300/380 | 0,23 | + | gut |
| 2 | 9/62 | 14/105 | 1550/380 | 0,21 | ++ | gut |
| 3 (Vgl.) | 11/79 | 13/103 | 543/374 | 0,22 | -- | gut |
| 4 (Vgl.) | 11/72 | 11/94 | 540/735 | 0,21 | - | schlecht |
| 5 (Vgl.) | 9/70 | 13/102 | 850/356 | 0,20 | 0 | gut |
| Eigenschaften der Beispiele 1 und 2 sowie Vergleichsbeispiele 3, 4 und 5 | | | | | | |

-- sehr schlecht
- schlecht
0 standard
+ gut
++ sehr gut

Die Vergleichsbeispiele belegen, daß Folien gemäß Stand der Technik nicht die gestellten Aufgaben lösen.

**Patentansprüche**

1. Biaxial orientierte, koextrudierte, mindestens dreischichtige Polyesterfolie, deren beide Oberflächen durch Deckschichten A und C gebildet werden, wobei sich zwischen diesen Deckschichten eine Basisschicht B befindet, dadurch gekennzeichnet, daß die Deckschicht A einen Messwert für die Gasströmung im Rauhigkeitsprofil von > 1000 sec. und < 2000 sec. aufweist und die Deckschicht C einen Messwert für die Gasströmung im Rauhigkeitsprofil von <600 sec. aufweist.

2. Folie nach Anspruch 1, dadurch gekennzeichnet, daß die Deckschichten A und C Partikel enthalten.

3. Folie nach Anspruch 2, dadurch gekennzeichnet, daß die Deckschichten A und C Partikel in einer Konzentration von jeweils 500 ppm bis 10.000 ppm, bezogen auf das Gewicht der jeweiligen Deckschicht, enthält.

4. Folie nach Anspruch 2 oder 3, dadurch gekennzeichnet, daß die mittlere Korngröße $d_{50}$ der Partikel in der Deckschicht A zwischen 0.1 μm und 0.6 μm liegt.

5. Folie nach Anspruch 2, 3 oder 4, dadurch gekennzeichnet, daß die mittlere Korngröße $d_{50}$ der Partikel in der Deckschicht C zwischen 0.4 μm und 1.0 μm liegt

6. Folie nach einem oder mehreren der Ansprüche 2 bis 5, dadurch gekennzeichnet, daß die Messwerte der Gasströmungen im Rauhigkeitsprofil der Deckschichten A und C durch Variation der mittleren Korngrößen $d_{50}$ der Partikel in den Deckschichten A und C eingestellt werden.

7. Folie nach einem oder mehreren der Ansprüche 1 bis 6, dadurch gekennzeichnet, daß die Deckschichtdicken der Deckschichten A und C unabhängig voneinander gleich oder verschieden sind und zwischen 0.3 bis 2.5 μm liegen.

8. Folie nach einem oder mehreren der Ansprüche 1 bis 7, dadurch gekennzeichnet, daß die Gesamtfoliendicke 5 μm bis 40 μm beträgt.

9. Folie nach einem oder mehreren der Ansprüche 1 bis 8, dadurch gekennzeichnet, daß die Basisschicht B Folienregenerat enthält.

10. Verfahren zur Herstellung einer biaxial orientierten, koextrudierten, mindestens dreischichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei die Deckschicht A einen Messwert für die Gasströmung im Rauhigkeitsprofil von > 1000 sec. und < 2000 sec. aufweist und die Deckschicht C einen Messwert für die Gasströmung im Rauhigkeitsprofil von <600 sec. aufweist.

11. Magnetisches Aufzeichnungsmedium, enthaltend eine Folie nach Anspruch 1 und eine auf einer Oberfläche der Folie aufgebrachten magnetisierbaren Schicht.

12. Magnetisches Aufzeichnungsmedium nach Anspruch 11, dadurch gekennzeichnet, daß die magnetisierbare Schicht auf die Deckschicht A aufgebracht ist.

13. Verwendung einer Folie nach Anspruch 1 als Magnetband.

14. Verwendung einer Folie nach Anspruch 1 als Thermo-Transfer-Ribbon.